# EUROPEAN PATENT SPECIFICATION

(11) **EP 1 820 561 B1**
(45) Date of publication and mention of the grant of the patent: **31.12.2014**
(21) Application number: 07101480.7
(22) Date of filing: 31.01.2007
(51) Int. Cl.: B01D 53/94, B01J 23/00, B01J 23/02, B01J 23/10, B01J 23/42, B01J 23/44, F01N 3/022, F01N 3/28

(54) **Diesel particulate filter comprising a catalytic layer**
Dieselpartikelfilter enthaltend eine katalytische Beschichtung
Filtre à particules diesel comprenant un revêtement catalytique

(30) Priority: 20.02.2006 JP 2006042212
(43) Date of publication of application: 22.08.2007
(73) Proprietor: Mazda Motor Corporation, Aki-gun Hiroshima 730-8670 (JP)
(72) Inventor: Fujita, Hiroki c/o Mazda Motor Corporation, Hiroshima 730-8670 (JP); Harada, Koichiro c/o Mazda Motor Corporation, Hiroshima 730-8670 (JP); Okamoto, Kenji c/o Mazda Motor Corporation, Hiroshima 730-8670 (JP); Tsushio, Yoshinori c/o Mazda Motor Corporation, Hiroshima 730-8670 (JP); Takami, Akihide c/o Mazda Motor Corporation, Hiroshima 730-8670 (JP); Suzuki, Kenji c/o Mazda Motor Corporation, Hiroshima 730-8670 (JP)
(74) Representative: Zinnecker, Armin

(56) References cited:
- EP-A- 1 504 815
- EP-A- 1 640 056
- EP-A- 1 712 278
- EP-A2- 1 716 913
- WO-A-02/22242
- WO-A-02/26379
- WO-A-93/10885
- JP-A- 2007 054 713
- JP-A- 2007 069 977
- KRANTHI K AKURATI ET AL: "Silica-based composite and mixed-oxide nanoparticles from atmospheric pressure flame synthesis", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, vol. 8, no. 3-4, 26 April 2006 (2006-04-26), pages 379-393, XP019404312, ISSN: 1572-896X, DOI: 10.1007/S11051-005-9024-Y

## Description

### BACKGROUND OF THE INVENTION

### (a) Field of the Invention

This invention relates to diesel particulate filters.

### (b) Description of the Related Art

In order to prevent particulates (gas-borne particulate matter) contained in exhaust gas of a diesel engine from being emitted into the air, it is effective to fit a diesel particulate filter (DPF) in the exhaust pipe of the engine. The DPF is obtained by forming a heat-resistance ceramic material, such as silicon carbide (SiC) or cordierite, in a three-dimensional network structure or a wall-through honeycomb structure. Particulates in exhaust gas are trapped by the DPF during the passage of the exhaust gas through the DPF. In order to burn off trapped particulates, the DPF has a catalyst layer coated on the wall surfaces of exhaust gas channels in the DPF. For example, Published Japanese Patent Application No. 2003-334443 (EP 1 504 815 A1) discloses that a mixture of cerium-zirconium (Ce-Zr) composite oxide and γ-alumina is loaded on a monolith support and platinum (Pt) is loaded on the mixture at 2g per 1 L of the monolith support.

Though the above document also discloses that Ce-Zr composite oxide is effective in increasing the particulate burning rate under low-temperature conditions, there is a demand in the art to further increase the particulate burning rate to burn off particulates more efficiently.

WO 93/10885 discloses an oxidation catalyst and its method of use. These oxidation catalyst compositions include a catalytic material having a BET surface area of at least 10 m²/g and consisting essentially of a combination of bulk ceria and a bulk second metal oxide which may be one or more of titania, zirconia, ceria-circonia, silica, alumina-silica and α-alumina.

WO 02/26379 discloses a catalytic soot filter and the use thereof in treatment of lean exhaust gases. The particle filter is provided with a catalytic coating comprising a first group of components for reducing the ignition temperature of soot, said first group of components contains at least one oxygen storage component and at least one platinum group metal selected from the group consisting of platinum, palladium and rhodium.

EP 1 640 056 A2 discloses an exhaust gas purification system, whereas an upstream catalyst and a downstream catalyst are disposed upstream of a particulate filter in an exhaust passage of a diesel engine. The catalyst comprises a catalytic layer which is formed on the wall surfaces and is used for increasing the temperature of the exhaust gas at the filter entrance. The downstream catalyst has a larger amount of support material for supporting catalytic metal than the upstream catalyst.

WO 02/22242 refers to a composite of cerium, zirconium and samarium components and to a catalyst composition containing such composite as well as the use of such catalyzed composition for the treatment of a gas stream to reduce contaminants contained therein. A ternary catalyst containing Pt, Rh, γ-alumina, La-stabilized alumina and a composite oxide of Ce, Zr and Sm are disclosed.

EP 1 712 278 A1 discloses a particulate burning catalyst for Diesel exhaust gas, in which Pd is supported on oxide particles containing ceria-zlrconia, ceriapraseodymium oxide, ceria-zirconia including yttria or lanthanum oxide or ceriapraseodymium oxide including yttria or lanthanum oxide.

EP 1 504 815 A1 discloses a particulate oxidant containing Pt and a composite oxide comprising Ce, Zr and rare earth metal other than Ce. The amount of Ce included in the composite oxide is 20 mol% or less.

EP 1 716 913 A2 discloses a diesel particulate filter configured to allow the burning rate of particulates to increase even with a small amount of catalytic metal or even without using any catalytic metal. In the diesel particulate filter, walls forming exhaust gas channels in a filter body on which the particulates are trapped are coated with a catalyst layer for promoting the burning of the trapped particulates. The catalyst layer contains a mixed oxide in which Ce, Zr and a rare earth element R other than Ce are contained in a Ce/(Ce+Zr) mole ratio between 10% and 90% both inclusive or between 20% exclusive and 80% inclusive.

Specifically, in order to burn off particulates deposited on the DPF, there has been a need, for example, to dispose an oxidation catalyst upstream of the DPF, supply fuel to the oxidation catalyst, and use reaction heat produced therein to increase the DPF temperature. To satisfy the need, the amount of fuel supplied to the engine is increased relative to that in normal operation so that unburned fuel in the engine can be supplied to the oxidation catalyst. Therefore, in order to avoid deterioration in fuel efficiency due to regeneration of the DPF, it is desired to further increase the particulate burning rate.

Meanwhile, it is preferable that unburned components in exhaust gas, such as hydrocarbons (HC) and carbon monoxide (CO), are converted by a catalyst disposed upstream of the DPF. In order to enhance the conversion efficiency, it is desired to efficiently convert such unburned components also in the DPF. Since, particularly in regenerating the DPF, the amount of fuel supplied to the engine is increased, it is desired to enhance the exhaust gas purification performance of the DPF.

The particulate burning rate and the exhaust gas purification performance of the DPF can be enhanced by increasing the amount of catalytic metal loaded on the support material, such as a composite oxide as described above. However, if the amount of catalytic metal loaded on the support material is increased, the DPF becomes more expensive correspondingly.

### SUMMARY OF THE INVENTION

Bearing in mind the above, an object of the present invention is to enhance the particulate burning rate and the exhaust gas purification performance of the DPF while minimizing the amount of catalytic metal used.

The inventor has found that a composite oxide consisting of a cerium-alkaline earth metal binary oxide is effective in increasing the particulate burning rate and combining the composite oxide with alumina and Pt enhances the exhaust gas purification performance of the DPF concurrently, thereby completing the present invention.

More specifically, the present invention is directed to a diesel particulate filter disposed in an exhaust passage of a diesel engine and including a filter body for trapping particulates exhausted from the engine, walls forming exhaust gas channels in the filter body being coated with a catalyst layer for promoting the burning of the trapped particulates, and the diesel particulate filter is characterised in that the catalyst layer contains alumna and a composite oxide consisting of a cerium-alkaline earth metal binary oxide and Pt is loaded on the alumina and the composite oxide.

According to the present invention, the particulate burning rate of the DPF increases and the exhaust gas purification performance thereof enhances.

The reason why the particulate burning rate increases can be considered as follows. When particulates trapped by the DPF reacts with oxygen released from the composite oxide to generate firing points, the areas around the firing points run short of oxygen. However, since the composite oxide has a higher oxygen ionic conductivity than Ce-Zr composite oxide conventionally used, oxygen ions are likely to be efficiently and continuously supplied from high oxygen concentration sites via the composite oxide to the firing points. Therefore, it can be considered that once firing points are generated, particulates rapidly burn off even if the amount of Pt loaded as a catalyst is small.

On the other hand, since the catalyst layer contains a catalytic component obtained by loading Pt on alumina, the catalytic component efficiently converts HC and CO in exhaust gas by oxidation. Furthermore, as later shown by experimental data, the catalytic component acts to increase the particulate burning rate, combined with the Pt-loading composite oxide.

The ratio of the amount of Pt loaded on the alumina to the total amount of Pt loaded on the composite oxide and Pt loaded on the alumina is preferably not less than 35 mass%.

As described above, the catalytic component obtained by loading Pt on alumina is effective in enhancing the exhaust gas purification performance of the DPF. However, if the ratio of the amount of Pt loaded on the alumina is low, as later shown in experimental data, the effect is not sufficiently exhibited and the exhaust gas purification performance is rather deteriorated. Therefore, the ratio of the amount of Pt loaded on the alumina is preferably not less than 35 mass%, which surely enhances the exhaust gas purification performance of the DPF.

The ratio of the amount of Pt loaded on the alumina is preferably not more than 90 mass%. Increasing the ratio of the amount of Pt loaded on the alumina is effective in enhancing the exhaust gas purification performance of the DPF. However, if the ratio is excessive, the amount of Pt to be loaded on the composite oxide becomes smaller correspondingly. Since the Pt-loading composite oxide greatly contributes to increasing the particulate burning rate, the ratio of the amount of Pt loaded on the alumina is preferably not more than 90 mass% in order to avoid decrease in the particulate burning rate.

The ratio of the amount of Pt loaded on the alumina is more preferably between 50 mass% and 90 mass% both inclusive and still more preferably more than 50 mass%.

Preferably, palladium (Pd) is further loaded on the alumina on which Pt is loaded. This enhances the exhaust gas purification performance of the DPF under low-temperature conditions. In this case, though Pd is inferior in heat resistance to Pt, this is not significant disadvantage. The reason for this is, as described above, that the combination of the Pt-loading composite oxide and the Pt-loading alumina increases the particulate burning rate and, therefore, particulates can be well burnt off without the need to increase the DPF temperature as conventionally done. In other words, since there is no need to increase the DPF temperature to a high temperature as conventionally done in order to burn off particulates, this avoids thermal deterioration of Pd. Therefore, Pd can be effectively used to enhance the exhaust gas purification performance under low-temperature conditions.

As can be seen from the above, according to the present invention, even if the amount of Pt loaded is not so much, the particulate burning rate of the DPF increases and the exhaust gas purification performance thereof enhances. This is advantageous in rapid regeneration and exhaust gas conversion of the DPF at relatively low temperatures, improves fuel efficiency and provides cost reduction of the DPF.

### BRIEF DESCRIPTION OF THE DRAWINGS

Figure **1** is an exhaust gas purification system for a diesel engine.
Figure **2** is a front view schematically showing a DPF.
Figure **3** is a vertically cross-sectional view schematically showing the DPF.
Figure **4** is an enlarged cross-sectional view schematically showing a wall that separates an exhaust gas inflow channel from an exhaust gas outflow channel in the DPF.
Figure **5** is a conceptual diagram illustrating an example of the structure of components contained in a catalyst layer in the DPF.
Figure **6** is a graph showing carbon burning rates of various oxides on which Pt is loaded.
Figure **7** is a graph showing the exhaust gas purification performance of the DPF according to an embodiment of the present invention using a Ce-Sm composite oxide.
Figure **8** is a graph showing the carbon burning rate of the DPF according to the above embodiment.

### DETAILED DESCRIPTION OF THE INVENTION

A preferred embodiment of the present invention will be described below with reference to the drawings.

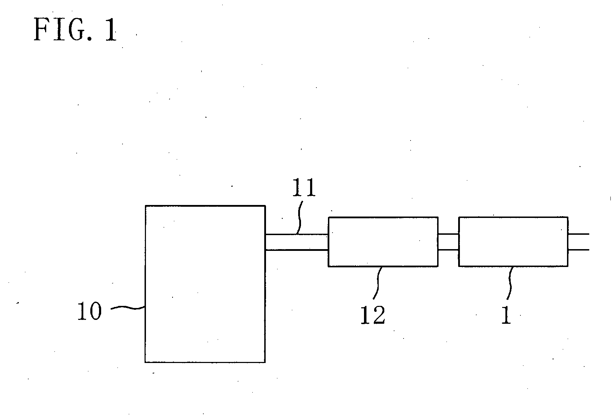

In Figure **1****,** the reference numeral **1** denotes a DPF disposed in an exhaust passage **11** of a diesel engine **10.** An upstream catalyst **12** is disposed in the exhaust passage **11** upstream of the DPF **1** in the flow direction of exhaust gas. A NOx trap catalyst having oxidation catalytic function, an oxidation catalyst containing no NOx storage component or both can be disposed as the upstream catalyst **12.**

The NOx trap catalyst is obtained by loading, on a support material such as active alumina, a NOx storage component (such as an alkali earth metal, typically Ba, or an alkali metal) for absorbing NOx in the exhaust gas at high oxygen concentrations in the exhaust gas (at lean air-fuel ratios) and a catalytic metal, such as Pt, for reducing NOx released from the NOx storage component when the oxygen concentration in the exhaust gas drops (at stoichiometric or rich air-fuel ratios), and also acts as a catalyst for converting HC and CO to harmless substances by oxidation.

The oxidation catalyst is obtained by loading a catalytic metal, such as Pt or Pd, on a support material such as active alumina and acts to oxidize HC and CO in the exhaust gas. When the oxidation catalyst is disposed upstream of the DPF **1,** NO in the exhaust gas is oxidized into NO₂ by the oxidation catalyst and produced NO₂ is then supplied as an oxidizing agent for burning particulates to the DPF **1.**

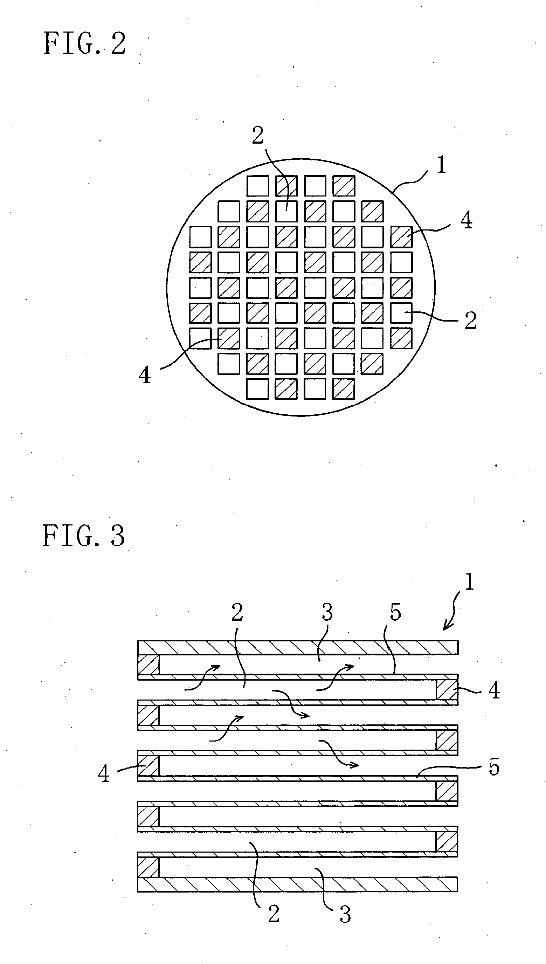

As schematically shown in Figures **2** and **3****,** the DPF **1** has a honeycomb structure in which a large number of exhaust gas channels **2** and **3** run in parallel with each other. Specifically, the DPF **1** has a structure in which a plurality of exhaust gas inflow channels **2** and a plurality of exhaust gas outflow channels **3** are alternately arranged vertically and horizontally. Each exhaust gas inflow channel **2** is closed at the downstream end by a plug **4,** while each exhaust gas outflow channel **3** is closed at the upstream end by a plug **4.** The adjacent exhaust gas inflow and outflow channels **2** and **3** are separated from each other by a thin partition wall **5.** In Figure **2****,** the hatched parts denote the plugs **4** at the upstream ends of the exhaust gas outflow channels **3.**

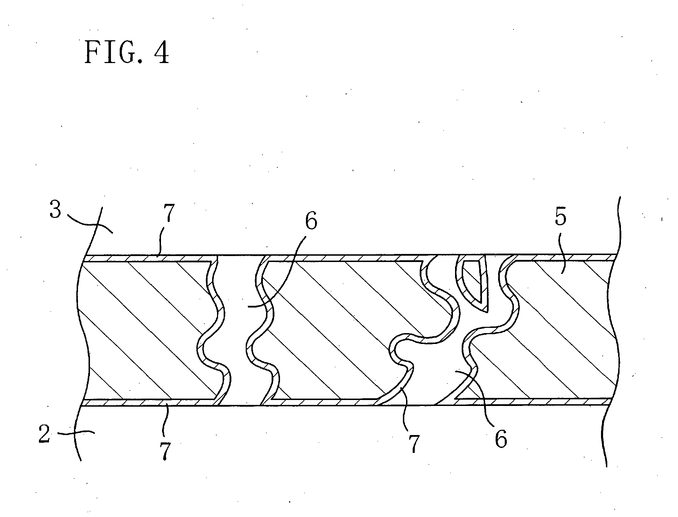

The body of the DPF **1** is formed of cordierite or an inorganic porous material, such as SiC, Si₃N₄ or sialon. The exhaust gas flowing into each exhaust gas inflow channel **2** flows out through the surrounding partition walls **5** into the adjacent exhaust gas outflow channels **3,** as shown in arrows in Figure **3****.** More specifically, as shown in Figure **4****,** each partition wall **5** is formed with micro pores (exhaust gas channels) **6** communicating the exhaust gas inflow channel **2** with the adjacent exhaust gas outflow channel **3** so that the exhaust gas flows through the micro pores **6.** Particulates are trapped and deposited mainly on the wall surfaces of the exhaust gas inflow channels **2** and the micro pores **6.**

A catalyst layer **7** for promoting the burning of trapped particulates is coated on the walls of all the exhaust gas channels (i.e., exhaust gas inflow channels **2,** exhaust gas outflow channels **3** and micro pores **6**) in the body of the DPF **1.** The catalyst layer **7** contains alumina and a composite oxide consisting of a cerium-alkaline earth metal binary oxide and at least Pt is loaded as a catalytic metal on the alumina and the composite oxide. However, it is not necessarily required to form the catalyst layer on the walls of the exhaust gas outflow channels **3.**

A detailed description will be given below of the catalyst layer of the DPF **1.**

### <General Structure of Catalyst Layer>

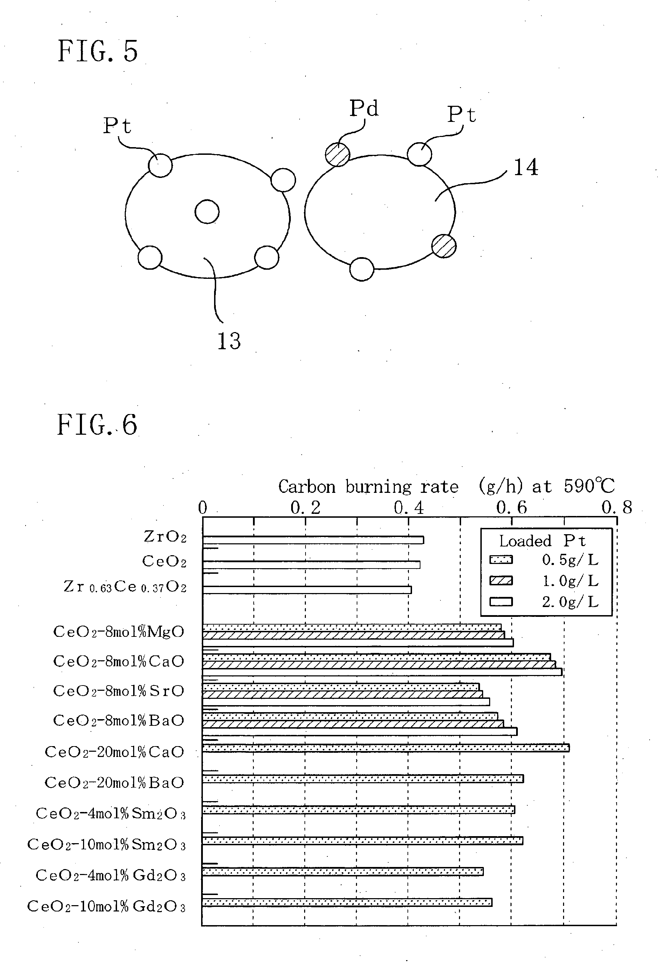

Figure **5** is a conceptual diagram showing the structure of components constituting the catalyst layer in the DPF **1** according to the present invention. In Figure **5****,** the reference numeral **13** denotes a composite oxide particle contained in the catalyst layer and loading Pt particles, and the reference numeral **14** denotes an alumina particle contained in the catalyst layer and loading Pt particles and Pd particles. Some alumina particles **14** in the catalyst layer loads no Pd particles. The composite oxide particle **13** may load one or more other kinds of catalytic metal particles in addition to Pt particles and the alumina particle **14** may load one or more other kinds of catalytic metal particles in addition to Pt and Pd particles.

### <Carbon Burning Rates of Various Kinds of Oxides>

Figure **6** shows results of measurement of carbon burning rates carried out in order to evaluate the diesel particulate burning rates of various kinds of oxides including composite oxides, in which the carbon burning rates of the oxides were measured instead of the diesel particulate burning rates. Samples for the evaluation were prepared as follows. First, a slurry was prepared by adding a ZrO₂ binder and ion-exchange water to each oxide on which Pt particles were loaded. The obtained slurry was coated on the wall surfaces of the exhaust gas channels in a SiC filter body of 25 mL capacity uniformly over the entire filter length. Then, the filter was calcined by keeping it at 500°C for two hours under atmospheric conditions. In loading Pt on each oxide, a solution of diamminedinitro platinum nitrate was used as a Pt source and an evaporation-to-dryness method was employed.

Before the measurement of the carbon burning rate, each sample was aged by keeping it at 800°C for 24 hours under atmospheric conditions and 10g/L of carbon was then deposited on the catalyst layer of the sample. Next, each sample was attached to a fixed-bed flow reactor and the internal temperature of the reactor was raised from room temperature at a rate of 15°C per minute with the sample in a flow of nitrogen gas containing 10 volume% of oxygen. Then, when the gas temperature reached 590°C, the carbon burning rate of the sample was determined by examining changes in CO concentration and CO₂ concentration in the gas having passed through the sample.

The left column of Figure **6** indicates the kinds of oxides used. In this column, Zr_{0.63}Ce_{0.37}O₂ is a Zr-Ce composite oxide containing Zr and Ce at a molar ratio of 63:37. Oxides including CeO₂-8mol%MgO and listed below it are binary oxides containing Ce as a major component and one kind of alkali earth metal or rare earth metal, such as Mg, but not containing Zr. The term "mol%" means that, for example, in CeO₂-8mol%MgO, the composite oxide contains 8% by mole of MgO with respect to its total molar quantity. All of these composite oxides were prepared by coprecipitation. The term "loaded Pt" described in the upper right corner of Figure **6** means the value showing the amount of Pt loaded per 1L of filter body.

Figure 6 shows that the Zr-Ce composite oxide has a smaller carbon burning rate than ZrO₂ and CeO₂ that the binary oxides containing Ce as a major component and one kind of alkali earth metal (invention) or rare earth metal (outside the scope of the invention) have much higher carbon burning rates than not only the Zr-Ce composite oxide but also ZrO₂ and CeO₂, and particularly that though the amount of Pt loaded of each of the Zr-Ce composite oxide, ZrO₂ and CeO₂ was 2g/L, the composite oxides containing Ce as a major component have much higher carbon burning rates than the Zr-Ce composite oxide, ZrO₂ and CeO₂ even if they have a smaller amount of Pt loaded of 0.5g/L. It can be seen from this that the composite oxides used in the DPF according to the present invention are very useful in rapidly burning off particulates.

### <Embodiment 1> [Outside the scope of the invention]

The DPF of this embodiment employs as a composite oxide a binary oxide containing Ce and Sm but containing no Zr. The Ce-Sm composite oxide (CeSmO) contains 4 mol% of Sm₂O₃ with respect to its total molar quantity and was prepared by coprecipitation. The method of producing the DPF is as follows.

Powder of a Pt-loading CeSmO (Pt/CeSmO) obtained by loading Pt particles on a Ce-Sm composite oxide was mixed with powder of a Pt-loading Al₂O₃ (Pt/Al₂O₃) obtained by loading Pt particles on γ-alumina and a ZrO₂ binder and ion-exchange water were added to the powder mixture to obtain a slurry. The obtained slurry was coated on the wall surfaces of exhaust gas channels in a SiC filter body of 25 mL capacity uniformly over the entire filter length and the filter was calcined by keeping it at 500°C for two hours under atmospheric conditions. In loading Pt on the Ce-Sm composite oxide and γ-alumina, an evaporation-to-dryness method was employed.

Then, a plurality of DPF samples were prepared that have different ratios of the amount of Pt loaded on γ-alumina to the total amount of Pt loaded on the Ce-Sm composite oxide and γ-alumina (hereinafter, referred to as the alumina-side Pt loading ratio) and each sample was measured in terms of exhaust gas purification performance and particulate burning rate. These samples are of five types having a common amount of Pt/CeSmO powder loaded of 25g/L (wherein g/L means gram per I L of filter body; the same applies hereinafter), a common amount of Pt/Al₂O₃ powder loaded of 25g/L, a common total amount of Pt in Pt/CeSmO and Pt/Al₂O₃ (i.e., amount of Pt loaded on CeSmO and Al₂O₃) of 0.5g/L and different alumina-side Pt loading ratios of 0 mass%, 25 mass%, 50 mass%, 75 mass% and 100 mass%. For example, in the sample having an alumina-side Pt loading ratio of 75 mass%, the amount of Pt in Pt/CeSmO is 0.125g/L and the amount of Pt in Pt/Al₂O₃ is 0.375g/L.

### Evaluation Test for Exhaust Gas Purification Performance

Each sample was aged by keeping it at 800°C for 24 hours under atmospheric conditions as described above and then subjected to a rig test to measure its T50 (°C) and C300 (%) that are indices for HC and CO conversion performance. The rig test was carried out by attaching each sample to a fixed bed flow reactor. The synthesized exhaust gas used had an A/F ratio of 28 and the following composition:
O₂: 10 volume%, water vapor (H₂O): 10 volume%, CO₂: 4.5 volume%, HC : 200 ppmC (converted to carbon amount), CO : 300 ppm, NO : 500 ppm and N₂ : the rest

T50 (°C) is the gas temperature at the inlet of the DPF when the concentration of each exhaust gas component (HC and CO) detected downstream of the DPF reaches half of that of the corresponding exhaust gas component flowing into the DPF (when the conversion efficiency reaches 50%) after the temperature of the synthesized exhaust gas is gradually increased (i.e., the light-off temperature), and indicates the low-temperature catalytic conversion performance of the DPF.

C300 (%) is the catalytic conversion efficiency of each exhaust gas component (HC and CO) when the synthesized exhaust gas temperature at the DPF inlet is 300°C and indicates the high-temperature catalytic conversion performance of the DPF.

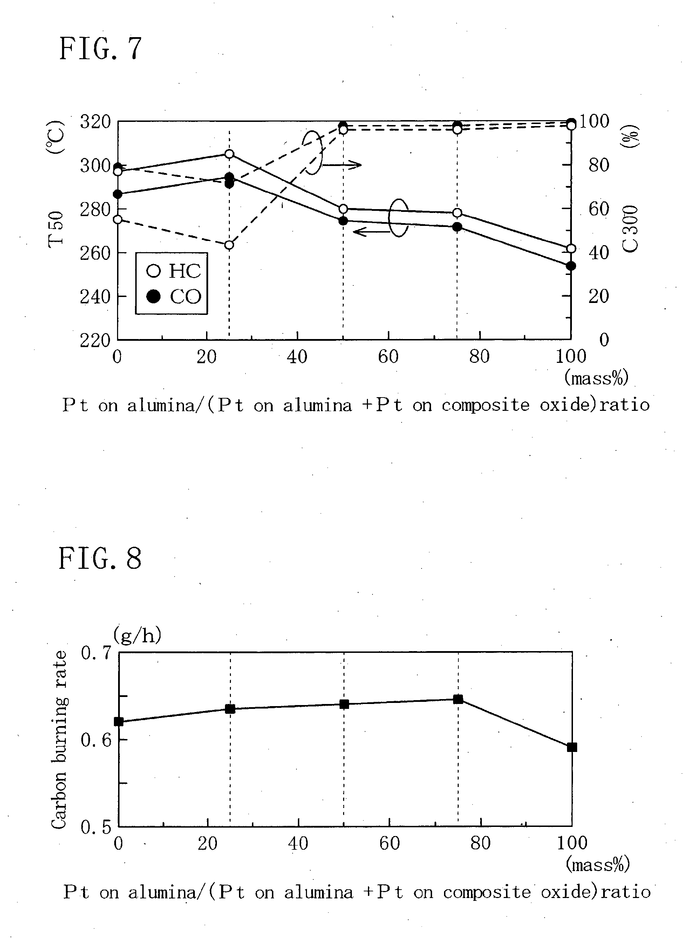

The test results for T50 (°C) and the test results for C300 (%) are shown in Figure 7. Referring to T50, when the alumina-side Pt loading ratio increased from 0 to 25 mass%, both HC and CO exhibited slightly higher T50. As the alumina-side Pt loading ratio further increased, HC and CO gradually decreased T50. Referring to C300, when the alumina-side Pt loading ratio increased from 0 to 25 mass%, both HC and CO slightly decreased. As the alumina-side Pt loading ratio further increased, HC and CO gradually increased C300. When the alumina-side Pt loading ratio was about 30 to about 35 mass%, HC and CO exhibited substantially the same T50 and C300 performances as those when the alumina-side Pt loading ratio was 0 mass%. Therefore, it can be seen that the alumina-side Pt loading ratio is preferably not less than 35 mass%, and more preferably not less than 50 mass%.

### Evaluation Test for Particulate Burning Rate

The carbon burning rate of each sample was determined, in the same manner as in the carbon burning rate measurement as described above with reference to Figure 6, in a flow of nitrogen gas containing 10 volume% of oxygen and 300 ppm of NO when the gas temperature reached 590°C. The results are as shown in Figure **8**.

Figure **8** shows that as the alumina-side Pt loading ratio increased to 75 mass%, the carbon burning rate steadily increased but that when the alumina-side Pt loading ratio reached 100 mass%, the carbon burning rate became smaller than when it was 0 mass%. Therefore, it can be seen from the figure that in order to provide high particulate burning rates, the alumina-side Pt loading ratio is preferably not more than 90 mass%.

### Effects of Pd Loading on Exhaust Gas Purification Performance

With the use of the sample having an alumina-side Pt loading ratio of 75 mass% and in the same manner as described above, a Pt additionally loading sample was prepared by additionally loading 0.5g/L of Pt on γ-alumina loading 0.375g/L of Pt and a Pd additionally loading sample was prepared by additionally loading 0.3g/L of Pd on γ -alumina loading 0.375g/L of Pt. Then, each of the obtained samples was subjected to an evaluation test for exhaust gas purification performance in the same manner as described above. The total amount of catalytic metal loaded of the Pt additionally loading sample was 1.0g/L and the total amount of catalytic metal loaded of the Pd additionally loading sample was 0.8g/L. The test results are shown in Table 1.

**Table 1**

| | T50(°C) | |
|---|---|---|
| | HC | CO |
| Pt(0.125)/CeSmO : Pt(0.375) /Al₂O₃ = 1: 1 (mass ratio) | 278 | 272 |
| Pt(0.125)/CeSmO: Pt(0.875)/Al₂O₃ = 1:1 (mass ratio) | 254 | 247 |
| Pt(0.125)/CeSmO: Pt(0.375) + Pd (0.3)/Al₂O₃ =1:1 (mass ratio) | 243 | 230 |

| | | |
|---|---|---|
| CeSmO is a Ce-Sm composite oxide containing 4 mol% of Sm₂O₃. | | |

Table 1 shows that when Pt was additionally loaded on γ-alumina, both HC and CO exhibited better T50 performance and also shows that when Pd was additionally loaded on γ-alumina, both HC and CO exhibited still better T50 performance. Furthermore, while the amount of Pt additionally loaded is 0.5g/L, the amount of Pd additionally loaded is 0.3g/L that is smaller than the former. Therefore, additionally loading Pd on γ -alumina significantly improves the exhaust gas purification performance of the DPF.

### <Embodiment 2> [Outside the scope of the invention]

The DPF of this embodiment employs, instead of the Ce-Sm composite oxide in Embodiment 1, a Ce-Gd composite oxide (CeGdO) containing 4 mol% of Gd₂O₃ and the other points are the same as in Embodiment 1. In the same manner as in Embodiment 1, five DPF samples were prepared that have different alumina-side Pt loading ratios of 0 mass%, 25 mass%, 50 mass%, 75 mass% and 100 mass%. Furthermore, with the use of the sample having an alumina-side Pt loading ratio of 75 mass% and in the same manner as described above, a Pt additionally loading sample was prepared by additionally loading 0.5g/L of Pt on γ-alumina and a Pd additionally loading sample was prepared by additionally loading 0.3g/L of Pd on γ-alumina. Then, as in Embodiment 1, the above five samples were subjected to evaluation tests for exhaust gas purification performance and particulate burning rate and the Pt additionally loading sample and the Pd additionally loading sample were subjected to an evaluation test for exhaust gas purification performance. The test results are shown in Tables 2 and 3.

**Table 2**

| PDF using Ce-Gd composite oxide | T50 (°C) | | C300 (%) | | Carbon burning rate (g/h) |
|---|---|---|---|---|---|
| Pt on Al₂O₃/(Pt on Al₂O₃+Pt on CeGdO) | HC | CO | HC | CO | |
| 0 mass% | 295 | 285 | 65.9 | 86.6 | 0.6 |
| 25 mass% | 292 | 280 | 66 | 87 | 0.62 |
| 50 mass% | 287 | 277 | 82 | 95 | 0.63 |
| 75 mass% | 280 | 270 | 94 | 98 | 0.64 |
| 100 mass% | 268 | 258 | 97 | 98.5 | 0.58 |

| | | | | | |
|---|---|---|---|---|---|
| CeGdO is a Ce-Gd composite oxide containing 4 mol% of Gd₂O₃- | | | | | |

**Table 3**

| | T50 (°C) | |
|---|---|---|
| | HC | CO |
| Pt(0.125)/CeGdO : Pt(0.375)/Al₂O₃= 1:1 (mass ratio) | 280 | 270 |
| Pt(0.125)/CeGdO - Pt(0.875)/Al₂O₃ = 1:1 (mass ratio) | 258 | 251 |
| Pt(0.125)/CeGdO: Pt(0.375) + Pd (0.3)/Al₂O₃ = 1:1 (mass ratio) | 243 | 231 |

| | | |
|---|---|---|
| CeGdO is a Ce-Gd composite oxide containing 4 mol% of Gd₂O₃. | | |

Table 2 shows that also when the Ce-Gd composite oxide was used as a composite oxide, as in the case of using the Ce-Sm composite oxide in Embodiment 1, high exhaust gas purification performance was obtained and the particulate burning rate increased. Furthermore, as in Embodiment 1, the carbon burning rate gradually increased as the alumina-side Pt loading ratio increased, but it decreased when the alumina-side Pt loading ratio was excessive. On the other hand, the case of using the Ce-Gd composite oxide is slightly different from the case of using the Ce-Sm composite oxide in Embodiment 1 in that it did not deteriorate the exhaust gas purification performance at an alumina-side Pt loading ratio of 25 mass% and the exhaust gas purification performance gradually increased as the alumina-side Pt loading ratio increased. However, no significant difference exists between the carbon burning rate at an alumina-side Pt loading ratio of 0 mass% and the carbon burning rate at an alumina-side Pt loading ratio of 25 mass%. Therefore, also in the case of using the Ce-Gd composite oxide, the alumina-side Pt loading ratio is preferably not less than 35 mass%.

Table 3 shows that also in the case of using the Ce-Gd composite oxide, as in the case of using the Ce-Sm composite oxide in Embodiment 1, the Pd additionally loading DPF sample exhibited better T50 performance for HC and CO than the Pt additionally loading DPF sample.

### <Embodiment 3>

The DPF of this embodiment employs, instead of the Ce-Sm composite oxide in Embodiment 1, a Ce-Mg composite oxide (CeMgO) containing 8 mol% of MgO and the other points are the same as in Embodiment 1. In the same manner as in Embodiment 1, five DPF samples were prepared that have different alumina-side Pt loading ratios of 0 mass%, 25 mass%, 50 mass%, 75 mass% and 100 mass%. Furthermore, with the use of the sample having an alumina-side Pt loading ratio of 75 mass% and in the same manner as described above, a Pt additionally loading sample was prepared by additionally loading 0.5g/L of Pt on γ-alumina and a Pd additionally loading sample was prepared by additionally loading 0.3g/L of Pd on γ-alumina. Then, as in Embodiment 1, the above five samples were subjected to evaluation tests for exhaust gas purification performance and particulate burning rate and the Pt additionally loading sample and the Pd additionally loading sample were subjected to an evaluation test for exhaust gas purification performance. The test results are shown in Tables 4 and 5.

**Table 4**

| PDF using Ce-Mg composite oxide | T50(°C) | | C300(%) | | Carbon burning rate (g/h) |
|---|---|---|---|---|---|
| Pt on Al₂O₃/(Pt on Al₂O₃+Pt on CeMgO) | HC | CO | HC | CO | |
| 0 mass% | 310 | 302 | 23.3 | 45.8 | 0.61 |
| 25 mass% | 295 | 287 | 58 | 77 | 0.64 |
| 50 mass% | 292 | 280 | 65 | 86 | 0.65 |
| 75 mass% | 285 | 273 | 80 | 94 | 0.63 |
| 100 mass% | 275 | 263 | 93 | 97 | 0.58 |

| | | | | | |
|---|---|---|---|---|---|
| CeMgO is a Ce-Mg composite oxide containing 8 mol% of MgO. | | | | | |

**Table 5**

| | T50 (°C) | |
|---|---|---|
| | HC | CO |
| Pt(0.125)/CeMgO: Pt(0.375)/Al₂O₃ = 1: 1 (mass ratio) | 285 | 273 |
| Pt(0.125)/CeMgO: Pt(0.875)/Al₂O₃ = 1: 1 (mass ratio) | 262 | 255 |
| Pt(0.125)/CeMgO : Pt(0.375) + Pd(0.3)/Al₂O₃ = 1:1 (mass ratio) | 253 | 241 |

| | | |
|---|---|---|
| CeMgO is a Ce-Mg composite oxide containing 8 mol% of MgO. | | |

Table 4 shows that also when the Ce-Mg composite oxide was used as a composite oxide, high exhaust gas purification performance was obtained and the particulate burning rate increased. Furthermore, as in Embodiment 2, the exhaust gas purification performance and the carbon burning rate gradually enhanced as the alumina-side Pt loading ratio increased, but the carbon burning rate decreased when the alumina-side Pt loading ratio was excessive. In this case, when the alumina-side Pt loading ratio increased from 0 mass% to 25 mass%, both the exhaust gas purification performance and me carbon burning rate significantly enhanced. Therefore, the alumina-side Pt loading ratio is preferably not less than 25 mass%.

Table 5 shows that also in the case of using the Ce-Mg composite oxide, as in the case of using the Ce-Sm composite oxide in Embodiment 1, the Pd additionally loading DPF sample exhibited better T50 performance for HC and CO than the Pt additionally loading DPF sample.

### <Embodiment 4>

The DPF of this embodiment employs, instead of the Ce-Sm composite oxide in Embodiment 1, a Ce-Ca composite oxide (CeCaO) containing 8 mol% of CaO and the other points are the same as in Embodiment 1. In the same manner as in Embodiment 1, five DPF samples were prepared that have different alumina-side Pt loading ratios of 0 mass%, 25 mass%, 50 mass%, 75 mass% and 100 mass%. Furthermore, with the use of the sample having an alumina-side Pt loading ratio of 75 mass% and in the same manner as described above, a Pt additionally loading sample was prepared by additionally loading 0.5g/L of Pt on γ-alumina and a Pd additionally loading sample was prepared by additionally loading 0.3g/L of Pd on γ-alumina. Then, as in Embodiment 1, the above five samples were subjected to evaluation tests for exhaust gas purification performance and particulate burning rate and the Pt additionally loading sample and the Pd additionally loading sample were subjected to an evaluation test for exhaust gas purification performance. The test results are shown in Tables 6 and 7.

**Table 6**

| PDF using Ce-Ca composite oxide | T50 (°C) | | C300(%) | | Carbon burning rate (g/h) |
|---|---|---|---|---|---|
| Pt on Al₂O₃/(Pt on Al₂O₃+Pt on CeCaO) | HC | CO | HC | CO | |
| 0 mass% | 303 | 297 | 37.6 | 60.8 | 0.87 |
| 25 mass% | 293 | 282 | 62 | 88 | 0.9 |
| 50 mass% | 285 | 275 | 85 | 92 | 0.91 |
| 75 mass% | 281 | 272 | 96 | 98 | 0.91 |
| 100 mass% | 269 | 260 | 98 | 99 | 0.79 |

| | | | | | |
|---|---|---|---|---|---|
| CeCaO is a Ce-Ca composite oxide containing 8 mol% of CaO. | | | | | |

**Table 7**

| | T50(°C) | |
|---|---|---|
| | HC | CO |
| Pt(0.125)/CeCaO : Pt(0.375)/Al₂O₃ = 1:1 (mass ratio) | 281 | 272 |
| Pt(0.125)/CeCaO:Pt(0,875)/Al₂O₃ = 1:1 (mass ratio) | 259 | 251 |
| Pt(0.125)/CeCaO : Pt(0.375) + Pd(0.3)/Al₂O₃ = 1;1 (mass ratio) | 250 | 239 |

| | | |
|---|---|---|
| CeCaO is a Ce-Ca composite oxide containing 8 mol% of CaO. | | |

Table 6 shows that also when the Ce-Ca composite oxide was used as a composite oxide, high exhaust gas purification performance was obtained and the particulate burning rate increased. Furthermore, as in Embodiment 2, the exhaust gas purification performance and the carbon burning rate gradually enhanced as the alumina-side Pt loading ratio increased, but the carbon burning rate decreased when the alumina-side Pt loading ratio was excessive. This case is characterized in that higher carbon burning rates were exhibited than in the former cases. Also in this case, when the alumina-side Pt loading ratio increased from 0 mass% to 25 mass%, both the exhaust gas purification performance and the carbon burning rate significantly enhanced. Therefore, the alumina-side Pt loading ratio is preferably not less than 25 mass%.

Table 7 shows that also in the case of using the Ce-Ca composite oxide, as in the case of using the Ce-Sm composite oxide in Embodiment 1, the Pd additionally loading DPF sample exhibited better T50 performance for HC and CO than the Pt additionally loading DPF sample.

### <Embodiment 5>

The DPF of this embodiment employs, instead of the Ce-Sm composite oxide in Embodiment 1, a Ce-Sr composite oxide (CeSrO) containing 8 mol% of SrO and the other points are the same as in Embodiment 1. In the same manner as in Embodiment 1, five DPF samples were prepared that have different alumina-side Pt loading ratios of 0 mass%, 25 mass%, 50 mass%, 75 mass% and 100 mass%. Furthermore, with the use of the sample having an alumina-side Pt loading ratio of 75 mass% and in the same manner as described above, a Pt additionally loading sample was prepared by additionally loading 0.5g/L of Pt on γ-alumina and a Pd additionally loading sample was prepared by additionally loading 0.3g/L of Pd on γ-alumina. Then, as in Embodiment 1, the above five samples were subjected to evaluation tests for exhaust gas purification performance and particulate burning rate and the Pt additionally loading sample and the Pd additionally loading sample were subjected to an evaluation test for exhaust gas purification performance. The test results are shown in Tables 8 and 9.

**Table 8**

| PDF using Ce-Sr composite oxide | T50 (°C) | | C300 (%) | | Carbon burning rate (g/h) |
|---|---|---|---|---|---|
| Pt on Al₂O₃ /(Pt on Al₂O₃+Pt on CeSrO) | HC | CO | HC | CO | |
| 0 mass% | 296 | 289 | 65.3 | 82.2 | 0.58 |
| 25 mass% | 290 | 278 | 80 | 88 | 0.61 |
| 50 mass% | 281 | 274 | 95 | 97 | 0.62 |
| 75 mass% | 272 | 271 | 96 | 98 | 0.63 |
| 100 mass% | 263 | 255 | 98 | 99 | 0.52 |

| | | | | | |
|---|---|---|---|---|---|
| CeSrO is a Ce-Sr composite oxide containing 8 mol% of SrO. | | | | | |

**Table 9**

| | T50(°C) | |
|---|---|---|
| | HC | CO |
| Pt (0.125)/CeSrO: Pt(0.375)/Al₂O₃ = 1:1 (mass ratio | 272 | 271 |
| Pt (0.125)/CeSrO: Pt(0.875)/Al₂O₃ = 1:1 (mass ratio) | 253 | 248 |
| Pt (0.125)/CeSrO: Pt(0.375) + Pd (0.3)/Al₂O₃= 1:1 (mass ratio) | 245 | 230 |

| | | |
|---|---|---|
| CeSrO is a Ce-Sr composite oxide containing 8 mol% of SrO. | | |

Table 8 shows that also when the Ce-Sr composite oxide was used as a composite oxide, high exhaust gas purification performance was obtained and the particulate burning rate increased. Furthermore, as in Embodiment 2, the exhaust gas purification performance and the carbon burning rate gradually enhanced as the alumina-side Pt loading ratio increased, but the carbon burning rate decreased when the alumina-side Pt loading ratio was excessive. Also in this case, when the alumina-side Pt loading ratio increased from 0 mass% to 25 mass%, both the exhaust gas purification performance and the carbon burning rate significantly enhanced. Therefore, the alumina-side Pt loading ratio is preferably not less than 25 mass%.

Table 9 shows that also in the case of using the Ce-Sr composite oxide, as in the case of using the Ce-Sm composite oxide in Embodiment 1, the Pd additionally loading DPF sample exhibited better T50 performance for HC and CO than the Pt additionally loading DPF sample.

### <Embodiment 6>

The DPF of this embodiment employs, instead of the Ce-Sm composite oxide in Embodiment 1, a Ce-Ba composite oxide (CeBaO) containing 8 mol% of BaO and the other points are the same as in Embodiment 1. In the same manner as in Embodiment 1, five DPF samples were prepared that have different alumina-side Pt loading ratios of 0 mass%, 25 mass%, 50 mass%, 75 mass% and 100 mass%. Furthermore, with the use of the sample having an alumina-side Pt loading ratio of 75 mass% and in the same manner as described above, a Pt additionally loading sample was prepared by additionally loading 0.5g/L of Pt on γ-alumina and a Pd additionally loading sample was prepared by additionally loading 0.3 g/L of Pd on γ-alumina. Then, as in Embodiment 1, the above five samples were subjected to evaluation tests for exhaust gas purification performance and particulate burning rate and the Pt additionally loading sample and the Pd additionally loading sample were subjected to an evaluation test for exhaust gas purification performance. The test results are shown in Tables 10 and 11.

**Table 10**

| PDF using Ce-Ba composite oxide | T50 (°C) | | C300 (%) | | Carbon burning rate (g/h) |
|---|---|---|---|---|---|
| Pt on Al₂O₃/(Pt on Al₂O₃+Pt on CeBaO) | HC | CO | HC | CO | |
| 0 mass% | 317 | 311 | 11.1 | 22.7 | 0.785 |
| 25 mass% | 307 | 296 | 44.4 | 71.9 | 0.88 |
| 50 mass% | 297 | 287 | 59.0 | 78.0 | 0.8 |
| 75 mass% | 287 | 278 | 85.0 | 94.0 | 0.79 |
| 100 mass% | 269 | 262 | 96.0 | 98.0 | 0.65 |

| | | | | | |
|---|---|---|---|---|---|
| CeBaO is a Ce-Ba composite oxide containing 8 mol% of BaO. | | | | | |

**Table 11**

| | T50 (°C) | |
|---|---|---|
| | HC | CO |
| Pt(0.125)/CeBaO : Pt(0.375)/Al₂O₃ = 1:1 (mass ratio) | 287 | 278 |
| Pt(0.125)/CeBaO : Pt(0.875)/Al₂O₃ = 1:1 (mass ratio) | 265 | 259 |
| Pt(0.125)/CeBaO : Pt(0.375) + Pd(0.3)/Al₂O₃ = 1:1 (mass ratio) | 252 | 243 |

| | | |
|---|---|---|
| CeBaO is a Ce-Ba composite oxide containing 8 mol% of BaO. | | |

Table 10 shows that also when the Ce-Ba composite oxide are used as composite oxide, high exhaust gas purification performance was obtained and the particulate burning rate increased. Furthermore, as in Embodiment 2, the exhaust gas purification performance and the carbon burning rate gradually enhanced as the alumina-side Pt loading ratio increased, but the carbon burning rate decreased when the alumina-side Pt loading ratio was excessive. This case is also characterized in that higher carbon burning rates were exhibited. Also in this case, when the alumina-side Pt loading ratio increased from 0 mass% to 25 mass%, both the exhaust gas purification performance and the carbon burning rate significantly enhanced. Therefore, the alumina-side Pt loading ratio is preferably not less than 25 mass%.

Table 11 shows that also in the case of using the Ce-Ba composite oxide, as in the case of using the Ce-Sm composite oxide in Embodiment 1, the Pd additionally loading DPF sample exhibited better T50 performance for HC and CO than the Pt additionally loading DPF sample.

### <Other Embodiments>

In the above embodiments, the content of rare earth metal or alkali earth metal in each composite oxide whose major component is Ce is 4 mol% or 8 mol%. In this respect, as is evident from data on carbon burning rate in Figure 6, it can be expected that the carbon burning rate will be increased by increasing the content of rare earth metal or alkali earth metal. Therefore, the content of rare earth metal or alkali earth metal may be increased within the range less than 50 mol%, for example, to 10 mol% or 20 mol%.

## Claims

1. A diesel particulate filter (1) disposed in an exhaust passage (11) of a diesel engine (10) and including a filter body for trapping particulates exhausted from the engine (10), walls forming exhaust gas channels (2, 6) in the filter body being coated with a catalyst layer (7) for promoting the burning of the trapped particulates,
**characterised in that**
the catalyst layer (7) contains alumina (14) and a composite oxide (13) consisting of a cerium-alkaline earth metal binary oxide in which Ce is included as a major component and in which the alkali earth metal is one of Mg, Ca, Sr and Ba, wherein Pt is loaded on the alumina (14) and the composite oxide (13).

2. The diesel particulate filter of claim 1, **characterised in that** the ratio of the amount of Pt loaded on the alumina (14) to the total amount of Pt loaded on the composite oxide (13) and Pt loaded on the alumina (14) is not less than 35 mass%.

3. The diesel particulate filter of claim 2, **characterised in that** the ratio is not more than 90 mass%.

4. The diesel particulate filter of any one of claims 1 to 3, **characterised in that** Pd is further loaded on the alumina (14) on which Pt is loaded.

## Patentansprüche

1. Dieselpartikelfilter (1), welcher in einem Auslasskanal (11) eines Dieselmotors (10) angeordnet ist und einen Filterkörper zum Zurückhalten von aus dem Motor (10) ausgestoßenen Partikeln umfasst, wobei Abgaskanäle (2, 6) in dem Filterkörper bildende Wände mit einer Katalysatorschicht (7) zum Fördern des Verbrennens der zurückgehaltenen Partikel beschichtet sind,
**dadurch gekennzeichnet, dass**
die Katalysatorschicht (7) Aluminiumoxid (14) und ein Verbundoxid (13) bestehend aus einem Cer-Erdalkalimetall-Binäroxid, in dem Ce als Hauptbestandteil enthalten ist und in dem das Erdalkalimetall eines von Mg, Ca, Sr und Ba ist, enthält, wobei Pt auf das Aluminiumoxid (14) und das Verbundoxid (13) geladen ist.

2. Dieselpartikelfilter nach Anspruch 1, **dadurch gekennzeichnet, dass** das Verhältnis der Menge an Pt, das auf das Aluminiumoxid (14) geladen ist, zur Gesamtmenge an Pt, das auf das Verbundoxid (13) geladen ist, und an Pt, das auf das Aluminiumoxid (14) geladen ist, nicht kleiner als 35 Masseprozent ist.

3. Dieselpartikelfilter nach Anspruch 2, **dadurch gekennzeichnet, dass** das Verhältnis nicht größer als 90 Masseprozent ist.

4. Dieselpartikelfilter nach einem der Ansprüche 1 bis 3, **dadurch gekennzeichnet, dass** auf das Aluminiumoxid (14), auf das Pt geladen ist, weiterhin Pd geladen ist.

## Revendications

1. Filtre à particules diesel (1) disposé dans un conduit d'échappement (11) d'un moteur diesel (10) et comportant un corps de filtre destiné à piéger des particules provenant du moteur (10), des parois qui forment des canaux de gaz d'échappement (2, 6) dans le corps de filtre étant recouvertes d'un revêtement catalytique (7) afin de favoriser la combustion des particules piégées,
**caractérisé en ce que**
le revêtement catalytique (7) contient de l'alumine (14) et un oxyde composite (13) consistant en un oxyde binaire de cérium et de métal alcalino-terreux dans lequel du Ce est inclus comme composant principal et dans lequel le métal alcalino-terreux est l'un parmi le Mg, le Ca, le Sr et le Ba, du Pt étant chargé sur l'alumine (14) et l'oxyde composite (13).

2. Filtre à particules diesel selon la revendication 1, **caractérisé en ce que** le rapport de la quantité de Pt chargé sur l'alumine (14) à la quantité totale de Pt chargé sur l'oxyde composite (13) et de Pt chargé sur l'alumine (14) n'est pas inférieur à 35 %m.

3. Filtre à particules diesel selon la revendication 2, **caractérisé en ce que** le rapport n'est pas supérieur à 90 %m.

4. Filtre à particules diesel selon l'une quelconque des revendications 1 à 3, **caractérisé en ce que** du Pd est en outre chargé sur l'alumine (14) sur laquelle du Pt est chargé.
